Europäisches Patentamt

European Patent Office

Office européen des brevets

(19)

(11) Numéro de publication: **0 271 414 B1**

(12) **FASCICULE DE BREVET EUROPEEN**

(45) Date de publication de fascicule du brevet:
03.04.91

(51) Int. Cl.⁵: **C03B 9/48**

(21) Numéro de dépôt: 87402804.6

(22) Date de dépôt: **10.12.87**

(54) Moules de verrerie et leur utilisation.

(30) Priorité: **12.12.86 FR 8617395**

(43) Date de publication de la demande:
**15.06.88 Bulletin 88/24**

(45) Mention de la délivrance du brevet:
**03.04.91 Bulletin 91/14**

(84) Etats contractants désignés:
**AT BE CH DE ES GB IT LI NL SE**

(56) Documents cités:
**WO-A-87/05594**
**FR-A- 1 264 731**
**FR-A- 2 385 811**
**GB-A- 488 121**
**US-A- 3 655 354**

(73) Titulaire: **SAINT-GOBAIN EMBALLAGE**
**Les Miroirs 18, Avenue d'Alsace**
**F-92400 Courbevoie(FR)**

(72) Inventeur: **Tangari, Celia Maria**
**Rua Marques de Pinedo 70-Apt. 101**
**BR-22231 Rio de Janeiro, RJ(BR)**
Inventeur: **Dugast, Alain**
**107, rue Bobillot**
**F-75013 Paris(FR)**
Inventeur: **Abriou, Daniel**
**3, Avenue des Verveines**
**F-93220 Gagny(FR)**

(74) Mandataire: **Le Vaguerese, Sylvain Jacques**
**et al**
**SAINT-GOBAIN RECHERCHE 39, quai Lucien**
**Lefranc**
**F-93304 Aubervilliers Cedex(FR)**

Rank Xerox (UK) Business Services

**Description**

Les techniques industrielles de production de récipients en verre du type bouteilles, flacons, pots ou analogues, sont pour les plus importantes d'entre elles des techniques dites "pressé-soufflé" et "soufflé-soufflé". Ces techniques permettent de produire à cadence élevée des objets de qualité satisfaisante pour l'usage considéré.

Dans ces techniques le verre traité, entre successivement en contact avec deux moules, un moule ébaucheur et un moule finisseur. Ces moules sont des éléments essentiels dans le processus qui détermine non seulement la forme mais aussi l'état de surface et les qualités mécaniques des objets produits. Ces moules, et particulièrment les moules ébaucheurs, sont soumis à des conditions très sévères. Ils subissent notamment des chocs thermiques et mécaniques importants et en très grand nombre. Ils sont également soumis à l'action chimique de l'atmosphère environnante et de la composition verrière. En raison de ces agressions multiples, la surface active du moule peut se dégrader relativement rapidement jusqu'à nécessiter le remplacement du moule. Ce phénomène de dégradation est très sensible pour les moules à base de fonte, moules qui sont les plus utilisés en raison de leur coût relativement faible, mais s'observe aussi avec des moules constitués d'autres métaux et notamment avec des moules en acier.

Il ne suffit pas, pour obtenir une production satisfaisante, de maintenir la surface du moule en état, il faut encore que celle-ci se prête à un bon contact avec la paraison. Par bon contact, il faut entendre une bonne introduction de la paraison puis une bonne distribution de celle-ci dans le moule ébaucheur. Il faut éviter que le verre ne "colle" sur le moule, ce qui se traduit sur l'article produit par des striures, des filets ou toute autre irrégularité de surface. Dans les modes traditionnels, pour éviter ces difficultés, on utilise des graisses. Systématiquement et à des intervalles de temps relativement brefs, le moule est enduit de ces graisses dont le rôle est de s'interposer entre le moule et la paraison.

Indépendamment de l'aspect contraignant que représente l'application systématique de ces graisses, cette façon de procéder ne permet pas de combattre la dégradation du moule. Pour améliorer la longévité de celui-ci, diverses techniques ont été proposées, telles que notamment celle préconisée par le brevet FR-A-2 385 811 qui prévoit le revêtement de la surface en contact avec le verre par des couches d'oxydes métalliques, les préférés étant les oxydes de chrome, de nickel ou de titane. Ces propositions, qui avaient également pour objectif d'aboutir à la suppression du graissage, imposaient même cette suppression puisque, selon ledit brevet français, le graissage se révèlerait néfaste pour la stabilité de la couche d'oxyde métallique, et donc pour la longévité du moule lui-même.

A l'expérience cependant, on constate que ces propositions ne donnent pas entièrement satisfaction et que l'utilisation du moule non graissé ne permet pas d'atteindre la régularité nécessaire dans le glissement de la paraison sur la surface du moule. Pour cette raison, l'invention se propose de fournir une technique conférant aux moules de verrerie une longévité accrue et, simultanément, des propriétés de contact avec le verre satisfaisantes. L'invention se propose aussi d'obtenir ces résultats dans des conditions, notamment de coût, qui soient avantageuses par rapport aux techniques traditionnelles conduisant à la réfection fréquente des moules.

Pour la fabrication d'objets en verre par les techniques de pressé-soufflé ou soufflé-soufflé, l'invention propose l'utilisation de moules métalliques en fonte, notamment de moules ébaucheurs, dont les parties exposées à la paraison sont revêtues d'une couche d'alumine uniforme d'épaisseur inférieure à 5 micromètres formée par pyrolyse d'une solution d'un composé organo-métallique de l'aluminium, après un échauffement préalable conduit de façon à obtenir leur oxydation superficielle.

On trouve dans la littérature antérieure l'idée de revêtir des moules ou d'autres dispositifs de formage du verre, de couches d'oxydes réfractaires et notamment d'alumine, pour les protéger contre la dégradation résultant des chocs thermiques. Le but poursuivi était alors de constituer une "barrière" thermique sur la surface protégée. Pour cette raison, le revêtement réalisé présentait une épaisseur relativement importante de l'ordre de 0,15 à 0,30 mm. Ce type de revêtement n'est pas envisagé selon l'invention. Une première raison en est que la constitution de ces couches épaisses est obtenue par des techniques relativement coûteuses, telle que la métallisation sous plasma. Par ailleurs, et ceci est encore plus sensible pour les techniques considérées selon l'invention, l'utilisation de couches épaisses requiert une fixation très spécifique sur la surface du moule. Faute d'une très forte fixation, la couche d'oxyde réfractaire se détacherait par plaques. Pour obtenir cette fixation, l'art antérieur propose par exemple de constituer préalablement ou simultanément au dépôt d'oxyde réfractaire, un dépôt d'un métal "support". Cette technique est donc relativement complexe. De plus, même lorsqu'elle est bien fixée sur le substrat, on ne peut éviter, dans la couche épaisse, la formation de crevasses et de fissures qui constituent l'amorce de défauts sur les articles produits avec de tels moules.

Par opposition à ce qui est proposé dans ces techniques antérieures, le revêtement des moules de verrerie selon l'invention est constitué par une couche d'alumine répartie uniformément et dont l'épaisseur ne dépasse pas quelques micromètres.

Les inventeurs ont constaté que l'efficacité de la couche protectrice ne parait pas croitre avec son épaisseur. Si une épaisseur minimum est nécessaire, celle-ci peut être aussi faible que 0,1 micromètre. Par ailleurs, une épaisseur supérieure au micromètre n'apporte pas d'avantage particulier. En pratique, pour éviter les difficultés rencontrées avec les couches épaisses antérieures, on ne dépasse pas 5 micromètres et on utilise de préférence des couches d'alumine dont l'épaisseur est comprise entre 0,2 et 0,8 micromètres.

Il est remarquable que des revêtements aussi minces permettent d'obtenir une modification sensible du comportement des moules. Cette amélioration ne peut s'analyser comme résultant de la formation d'une barrière thermique, cet effet ne pouvant être qu'extrêmement faible compte tenu de l'épaisseur de la couche. Par ailleurs, les moules revêtus de la façon indiquée précédemment sont utilisés avec une graisse de type traditionnel. L'expérience montre en effet, contrairement à ce qui apparaissait dans l'art antérieur, que l'utilisation de graisse n'affecte pas la stabilité de la couche d'alumine et que cette dernière, par des mécanismes qui seront indiqués plus loin lors de l'analyse détaillée, améliore l'efficacité du film lubrifiant en favorisant sa distribution bien uniforme.

Ainsi les moules selon l'invention combinent une longévité accrûe et des résultats, quant à la qualité des produits préparés, qui sont tout à fait comparables à ceux obtenus selon les techniques traditionnelles. L'invention permet en outre des améliorations très sensibles en ce qui concerne les conditions de graissage. Si comme nous l'avons indiqué le graissage est maintenu, la stabilité de la couche "lubrifiante" est telle que la fréquence du graissage peut être considérablement réduite lorsque les autres conditions opératoires sont inchangées.

Les avantages des moules selon l'invention ne se limitent pas à ces particularités ; en effet l'amélioration considérable de la stabilité de la couche lubrifiante permet d'opérer dans des conditions de température qui ne pouvaient être envisagées précédemment. Ainsi, dans les conditions usuelles antérieures a l'invention, le moule ébaucheur est généralement porté à une température de l'ordre de 450-480°C et le graissage, dont la fréquence est dépendante du débit de la machine, est renouvelé par exemple toutes les 20 minutes. Si, toutes lesdites autres conditions usuelles étant maintenues, la température du moule est élevée de 50 à 100°C, une modification du graissage ne permet pas d'éviter le collage plus de quelques minutes. Par ailleurs, la dégradation du moule lui-même intervient très rapidement. L'apparition de ces difficultés fixe pratiquement la limite supérieure de la température de travail. Par contraste, les exemples donnés dans la suite de cette description montrent qu'avec les moules selon l'invention, des températures allant jusqu'à 600°C ou même davantage peuvent être atteintes dans des conditions tout à fait acceptables.

L'analyse de la structure de la couche d'alumine à la surface du moule et l'étude des propriétés qui en résultent est faite dans la suite en faisant référence aux figures annexées. Parmi celles-ci :

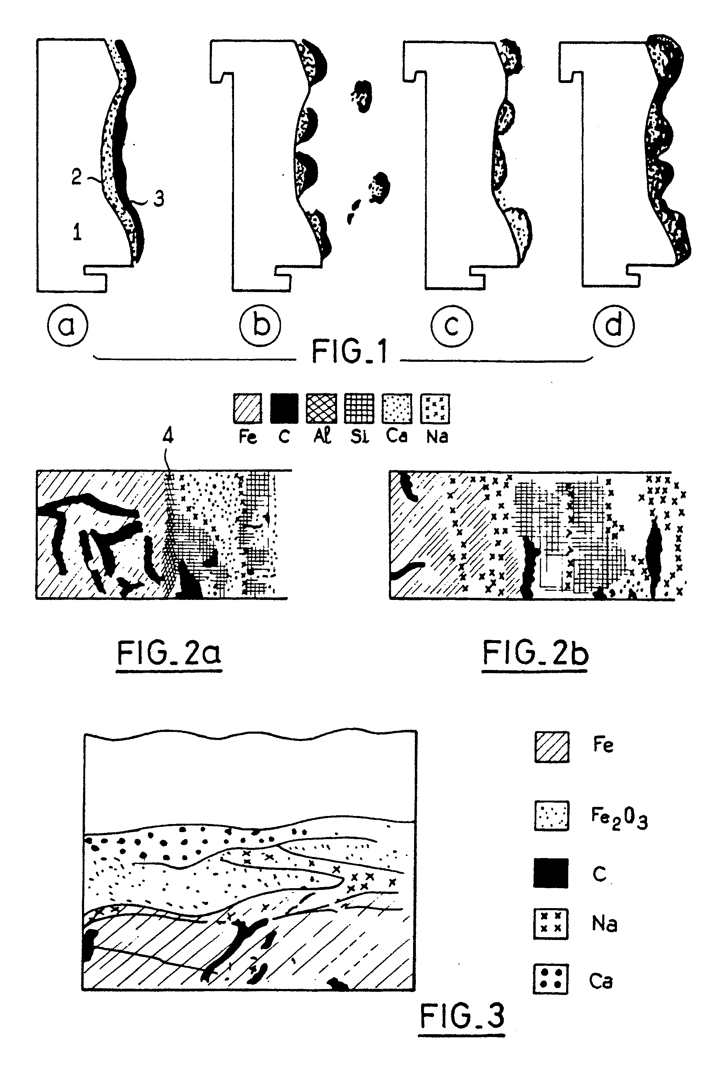

. les figures 1 a-d schématisent le mode de fonctionnement d'un moule traditionnel graissé,

. les figures 2a et 2b sont des reproductions schématiques d'analyses faites au moyen d'une microsonde électronique sur des parois de moules ébaucheurs respectivement traités selon l'invention et non traités, après un certain temps de travail,

. la figure 3 est également une représentation schématique de la surface du moule graissée, après usage.

Les mécanismes de dégradation de la surface des moules ont été étudiés par les inventeurs. Les observations faites conduisent à formuler l'hypothèse suivante.

Pour un moule en fonte (1) non revêtu, la surface de travail soumise à oxydation à température élevée se recouvre rapidement d'une couche superficielle d'oxyde (2). C'est sur cette couche d'oxyde (2) que repose le film de graisse (3). Il apparait au cours de l'utilisation du moule que la couche d'oxyde de fer résiste mal aux cycles thermiques imposés. Cette couche se fissure et se dégrade d'autant plus vite que le support de fonte sur lequel elle repose présente une structure poreuse. La dégradation de la couche d'oxyde peut aboutir, comme indiqué en 1b, à l'arrachage de particules et à l'apparition d'irrégularités de surfaces même lorsque, comme représenté en 1d, une nouvelle couche de graisse est appliquée. Ces irrégularités semblent être la raison du mauvais glissement de la paraison dans le moule ébaucheur même fraichement graissé et des défauts qui en résultent sur les produits. Bien que ce mécanisme ne soit pas établi de favon parfaitement rigoureuse, il semble bien rendre compte de ce que l'on peut observer. Il explique notamment que la dégradation soit fonction de la température du traitement, l'oxydation étant bien entendu plus sensible à température plus élevée et la couche d'oxyde poreux formée ne constituant pas une protection efficace du substrat sousjacent.

Les inventeurs ont constaté, à condition de prendre un minimum de précautions au moment de la formation de la couche d'alumine sur la surface du moule, qu'il était possible de bloquer, ou au moins de retarder considérablement les phénomènes de dégradation du moule et que ce résultat favorisait très sensiblement la longévité de l'enduction de graisse.

Les raisons qui conduisent à un revêtement résistant et bien régulier de la surface du moule par une pellicule aussi fine ne sont pas totalement élucidées.

Dans un premier temps, au moment de la constitution de cette couche d'alumine, selon la technique qui sera détaillée plus loin, on assiste à une oxydation légère de la surface de fonte préalablement décapée. Il se forme une couche d'oxyde de fer sur laquelle se dépose l'alumine. Ces deux couches superposées ne sont pas de même importance mais surtout ne font pas obstacle à une certaine migration.

L'analyse montre par exemple que de l'aluminium migre dans le substrat de fonte probablement par les zones poreuses constituées par les lamelles de graphite superficielles. Inversement, à proximité de la surface externe, la teneur en fer est extrêmement faible (de l'ordre de 2 %). De ces résultats on peut penser que "l'accrochage" de la couche d'oxyde sur la fonte est parfaitement réalisé. On observe par ailleurs au microscope électronique à balayage une accumulation d'alumine sur les lamelles de graphite de la fonte. Ceci peut expliquer la très bonne résistance à l'oxydation par blocage de ces sites privilégiés pour le développement de l'oxydation que constituent les pores graphités. Ces sites constituent également autant de points d'ancrage de la couche d'oxyde.

Nous avons vu que la présence de la couche d'alumine était favorable à l'efficacité de la couche lubrifiante en ce sens que sa stabilité permettait d'éviter les graissages fréquents liés à l'arrachage de particules superficielles du moule entrainant avec elles le lubrifiant dont elles sont couvertes. La présence de la couche d'alumine présente aussi d'autres avantages même pour les parties du moule qui, au cours de l'utilisation, ne se trouvent pas dépourvues de graisse.

L'analyse comparée, après usage, de surfaces comportant ou non la couche d'alumine et graissées dans les mêmes conditions permet de mettre en évidence des différences de structure.

Les figures 2a et 2b représentent schématiquement l'image obtenue, à l'aide d'une microsonde, de la répartition de divers éléments à la surface d'un moule ébaucheur traité et non traité après confection à 550° C de 9500 bouteilles.

Dans ces essais, l'épaisseur de la couche d'alumine initiale est de 0,4 micromètres. La graisse utilisée est une graisse vendue dans le commerce sous le nom de KLEENMOLD H.T. Cette graisse composite destinée aux températures élevées renferme des silicones, du graphite et des savons. Elle est appliquée en une couche uniforme d'une épaisseur de l'ordre de 40 micromètres.

La figure 2a montre que sur le moule traité selon l'invention la couche d'alumine (4) reste bien adhérente à la fonte, ce qui provient entre autre du fait que l'aluminium a partiellement diffusé dans la fonte. La couche d'alumine sépare de façon bien nette le support des constituants de la graisse ou du verre. On ne trouve aucun éléments de ceux-ci ayant franchi la couche d'alumine. C'est en particulier le cas du sodium provenant du verre que l'on retrouve dans la couche de graisse mais qui n'atteint pas la fonte.

Au contraire, sur la figure 2b, on constate la diffusion du sodium dans la fonte ce qui montre la perméabilité de la couche lubrifiante et son manque d'efficacité dans la protection du substrat.

L'analyse à la microsonde permet également de distinguer à la surface de la fonte les parties oxydées. Sur le moule traité selon l'invention, on ne décèle pratiquement pas d'oxyde de fer contrairement à ce que l'on observe sur les moules non traités. Cette distribution est représentée sur la figure 3 qui fait mieux paraitre encore l'interpénétration de la couche d'oxyde de fer et des éléments provenant de la graisse (Ca, Si) et du verre (Na).

Pour constituer une couche d'alumine bien régulière et adhérant solidement au substrat de fonte, diverses méthodes peuvent être envisagées comme par exemple la pyrolyse sous plasma, la métallisation (schoopage), l'électrophorèse... mais pour des raisons de simplicité on préfère selon l'invention procéder par pyrolyse liquide. Cette technique nécessite un minimum de matériel et permet d'atteindre des revêtements satisfaisants. Elle se prête bien à une mise en oeuvre qui doit être économique et facile à développer en usine et dans des conditions bien reproductibles.

Dans une forme particulièrement simple de réalisation, le moule préalablement décapé est porté à la température de décomposition du composé d'aluminium. Celui-ci, qui se trouve sous forme d'une solution, est pulvérisé sur la face à protéger. Le débit et le temps de pulvérisation permettent de contrôler l'épaisseur de la couche constituée.

Dans cette opération, le chauffage et la pulvérisation peuvent être exécutés dans une atmosphère ordinaire. Dans ce cas, il faut respecter un certain protocole pour éviter une oxydation excessive du moule avant la formation de la couche d'alumine. La fonte en effet s'oxyde très rapidement au-delà d'environ 450° C. Pour cette raison, la température à laquelle le moule est porté pour la pyrolyse n'est pas supérieure à 420° C et la pyrolyse est immédiatement mise en oeuvre dès que la température choisie est atteinte de

EP 0 271 414 B1

sorte que la couche d'alumine qui se forme s'oppose à l'oxydation ultérieure du substrat. La montée en température du moule est aussi rapide que possible, de l'ordre de quelques minutes.

En pratique, on constate qu'une très légère oxydation du moule ne nuit pas aux qualités du revêtement selon l'invention. Il faut cependant que la couche d'oxyde de fer formée reste extrêmement mince. On ne dépasse pas environ 0,1 micromètre faute de quoi on retrouverait les difficultés indiquées précédemment, à savoir un manque d'adhérence de la couche superficielle et une détérioration rapide du moule.

En opérant comme indiqué un chauffage rapide du moule suivi d'un dépôt immédiat de la couche d'alumine, on parvient à limiter la couche d'oxyde de fer aux épaisseurs indiquées et ceci même en opérant en atmosphère ordinaire.

Pour constituer la couche d'alumine, on utilise avantageusement une composition comprenant un composé d'aluminium du type organo-métallique en solution dans un solvant volatil. A titre d'exemple, on a utilisé comme composé organo-métallique de l'acétyl-acétonate d'aluminium ou pentane dionate 2-4 d'aluminium en solution dans du méthanol (0,12 mole).Le composé organo-métallique est pulvérisé au moyen d'un gaz porteur inerte comme l'azote sur la surface à revêtir préalablement portée à la température de décomposition.

L'invention concerne également les techniques de production soufflé-soufflé ou pressé-soufflé dans lesquelles, de façon générale, les températures de travail dans le moule ébaucheur sont accrues par rapport aux températures traditionnelles, sans pour autant que la longévité des moules soit sensiblement réduite.

Il est mal aisé de définir de façon absolue les températures de travail dans la mesure où celles-ci sont fonction de multiples facteurs susceptibles de varier d'une ligne de production à une autre. Parmi ces facteurs, on peut nentionner la nature du verre, la masse de la paraison, la cadence de production, la nature du moule, sa masse, son mode de refroidissement. Indépendamment de ces nombreux facteurs de variation, si on restreint le champ considéré aux moules de fonte traitant des articles en verre silico-sodo-calcique d'une masse de plus de 50 g, la température du moule ébaucheur se situe ordinairement entre 420 et 500 °C. Dans les mêmes conditions, le traitement selon l'invention est effectué à des températures plus élevées de 50 à 100 °C environ et se situent sans difficulté au-dessus de 500 °C et peuvent s'élever jusqu'à 600 °C et plus.

En pratique, l'accroissement de la température du moule ébaucheur est réglé par l'intensité du fluide de refroidissement circulant dans le moule.

Les températures, données à titre indicatif ci-dessus, sont celles qui sont mesurées sur la face Interne du moule dans la partie médiane. La partie du moule correspondant au col est d'ordinaire à température plus faible.

L'accroissement de température du moule ébaucheur revêtu d'alumine dans les conditions de l'invention est définie comme celle qui permet, à masse de verre constante dans tous les cas, de conserver sinon d'améliorer les qualités des articles produits tout en accroissant la cadence de traitement et sans réduire la durée de vie du moule.

Autrement dit, la température en question est telle qu'elle garantit un bon formage de l'ébauche, sans collage et sans usure excessive du moule en maintenant une fréquence de graissage acceptable.

Deux essais comparatifs ont été menés avec des moules ébaucheurs traités et non traités, mis en oeuvre dans des conditions rigoureusement identiques, notamment de température. La durée de vie des moules a été relevée pour chaque cas. Les résultats sont les suivants. Ils sont exprimés en heures de fonctionnement. Pour ces essais, la cadence de production des flacons de 250 ml pesant 130 g est de 250/mn.

|   |   |   |
|---|---|---|
| température °C | 546 | 470 |
| traité | 40 | 69 |
| témoin | 5,5 | 43 |

5

Aux températures usuelles de fonctionnement, on constate dans le cas de l'invention une longévité accrûe de 60 %. Ceci est déjà considérable mais s'ajoute aussi le fait que dans le cas de l'invention, la fréquence de graissage est environ 5 fois plus faible. Ces avantages sont très importants dans la pratique mais ils sont surpassés par ceux qui s'attachent aux opérations conduites avec un moule ébaucheur porté à une température supérieure aux températures habituelles. C'est le cas pour le moule travaillant à 546°C. Pour cette série d'essais, même en accroissant la fréquence de graissage, il n'a pas été possible de poursuivre l'utilisation de l'ébaucheur non revêtu d'alumine plus de 5,5 heures. Cette durée est insuffisante pour que l'on puisse raisonnablement envisager une production dans ces conditions. A la même température, avec un moule selon l'invention, la longévité obtenue bien qu'inférieure à celle correspondant au fonctionnement dans les conditions habituelles reste d'un ordre de grandeur acceptable.

Des essais à 580°C et 610°C conduisent à des résultats analogues. Même si la longévité du moule tend à diminuer lorsque la température est accrûe, celle-ci reste toujours très supérieure à celle que l'on observe pour les mêmes températures avec des moules non revêtus.

L'accroissement de température dont il est question précédemment, permet d'envisager des modifications importantes de la technique de production. Ainsi, les inventeurs ont montré qu'il était possible avec les moules revêtus de la couche d'alumine en augmentant la température d'accroitre la cadence de production.

La séquence de traitement en opérant avec un moule ébaucheur à température plus élevée n'est pas fondamentalement modifiée, mais certaines étapes peuvent être écourtées. Le temps de séjour dans le moule ébaucheur et le transfert vers le moule finisseur restent pratiquement inchangés. Du fait d'un réchauffement plus rapide de l'ébauche, ou si l'on veut d'une température globalement plus élevée, la phase d'allongement dans le moule finisseur est sensiblement plus rapide.

A titre d'exemple, avec une ébauche selon l'invention pénétrant dans le moule finisseur à environ 825°C, correspondant à un moule ébaucheur à 550°C, le temps d'allongement mesuré sur un enregistrement vidéo n'est environ que 6/10ème de celui obtenu avec une température d'ébauche à 787°C (correspondant à l'ébaucheur à 480°C). Le refroidissement du moule finisseur peut ainsi intervenir plus rapidement. Même si le refroidissement doit être un peu plus intense, compte tenu de la quantité de chaleur plus importante à évacuer par le moule finisseur, le gain de temps global reste très substantiel.

Ce gain de temps est rendu possible par le fait que l'étape de finition est la plus lente du processus. Si la cadence de finition est accélérée, celle de l'ébauchage peut aussi l'être sans difficulté.

A titre d'exemple pour la fabrication des flacons indiqués précédemment, correspondant à une masse de verre de 130 g, la machine fonctionne pour chaque moule à une cadence de 235 unités par minute à une température de 480°C. Avec les mêmes moules mais revêtus d'alumine dans le mode prévu par l'invention, la température de l'ébaucheur étant élevée à 550°C, la cadence de production a pû être portée à un peu plus de 265 unités par minute soit un accroissement de 13 %.

Un autre avantage lié à l'augmentation de la température de l'ébaucheur est de réduire la différence existant entre la température de la paraison et celle de l'ébaucheur. Par suite le gradient qui se forme dans la paraison entrant au contact de l'ébaucheur entre la température superficielle (ou température de peau) et celle au coeur de la paraison, est plus réduit. La diminution de ce gradient facilite une meilleure répartition du verre dans l'ébauche. Pour des raisons analogues, l'accroissement de température de l'ébauche facilite aussi la production d'objets présentant des formes réputées difficiles à réaliser de façon satisfaisante. C'est le cas notamment des flacons de par fumerie comportant des formes anguleuses.

Pour toutes les raisons indiquées précédemment, le traitement des moules suivant la technique proposée par l'invention est de grande utilité dans l'industrie.

**Revendications**

1. Moule en fonte pour la production de récipients en verre par une technique de "pressé-soufflé" ou de "soufflé-soufflé", dans lequel les parties exposées à la paraison sont revêtues d'une couche d'alumine uniforme d'épaisseur inférieure à 5 micromètres, formée par pyrolyse d'une solution d'un composé organo-métallique de l'aluminium, après un échauffement préalable conduit de façon à obtenir leur oxydation superficielle.

2. Moule selon la revendication 1 dans lequel la couche d'alumine présente une épaisseur comprise entre 0,2 et 0,8 micromètres.

3.  Moule selon la revendication 1 dans lequel la couche d'alumine est formée par pyrolyse de pentane-dionate 2-4 d'aluminium en solution dans du méthanol.

4.  Moule selon la revendication 3 dans lequel la formation de la couche d'alumine est obtenue par pulvérisation d'une solution du composé organo-métallique sur le moule préalablement porté à une température comprise entre 380 et 450° C.

5.  Procédé pour la production de récipients en verre par une technique de "pressé-soufflé" ou "soufflé-soufflé" dans lequel on utilise au moins des moules ébaucheurs selon l'une des revendications 1 à 4.

6.  Procédé selon la revendication 5 dans lequel les moules ébaucheurs, revêtus de la couche d'alumine, sont graissés.

7.  Procédé selon la revendication 5 ou la revendication 6 dans lequel la température du moule ébaucheur est maintenue supérieure ou égale à 500° C.


## Claims

1.  Mould of cast iron for the production of receptacles of glass by a "press and blow" or "blow and blow" technique, in which the parts exposed to the glass parison are coated with a uniform alumina layer of thickness less than 5 micrometres formed by pyrolysis of a solution of an organometallic compound of aluminium, after prior heating carried out in such a way as to obtain the surface oxidation of these parts.

2.  Mould according to Claim 1, in which the alumina layer has a thickness of from 0.2 to 0.8 micrometres.

3.  Mould according to Claim 1, in which the alumina layer is formed by pyrolysis of aluminium 2-4 pentane dionate in solution in methanol.

4.  Mould according to Claim 3, in which the forming of the alumina layer is achieved by atomization of a solution of the organometallic compound onto the mould previously raised to a temperature of from 380 to 450° C.

5.  A process for the production of receptacles of glass by a "press and blow" or "blow and blow" technique, in which at least roughing moulds according to one of Claims 1 to 4 are used.

6.  A process according to Claim 5, in which the roughing moulds, coated with the alumina layer, are greased.

7.  A process according to Claim 5 or Claim 6, in which the temperature of the roughing mould is kept above or equal to 500° C.


## Ansprüche

1.  Form zur Herstellung von Glasbehältern nach einem "Preß-Blas"- oder "Blas-Blas"-Verfahren, bei welcher die Teile, die dem Külbel ausgesetzt sind, mit einer gleichmäßigen Aluminiumoxid-Schicht überzogen sind, deren Stärke weniger als fünf Mikrometer beträgt und die durch Pyrolyse einer Lösung aus einer metallorganischen Aluminiumverbindung gebildet wird, im Anschluß an eine vorherige Erwärmung, die so gesteuert wird, daß eine Oberflächenoxidation erreicht wird.

2.  Form nach Anspruch 1, bei welcher die AluminiumoxidSchicht eine Stärke zwischen 0,2 und 0,8 Mikrometern aufweist.

3.  Form nach Anspruch 1, bei welcher die AluminiumoxidSchicht durch Pyrolyse von in Methanol gelöstem Aluminium-Pentan-Dionat 2-4 erzeugt wird.

4. Form nach Anspruch 3, bei welcher die Bildung der Aluminiumoxidschicht durch Aufspritzen einer Lösung der metallorganischen Verbindung auf die Form erfolgt, die zuvor auf eine Temperatur zwischen 380 und 450° C gebracht wurde.

5. Verfahren zur Herstellung von Glasbehältern nach einem "Preß-Blas" oder "Blas-Blas"-Verfahren, bei welchem zumindest Vorformen nach einem der Ansprüche 1 bis 4 verwendet werden.

6. Verfahren nach Anspruch 5, bei welchem die mit einer Aluminiumoxidschicht überzogenen Vorformen eingeschmiert werden.

7. Verfahren nach Anspruch 5 oder 6, bei welchem die Temperatur der Vorform höher oder gleich 500° C gehalten wird.

FIG.1

Fe  C  Al  Si  Ca  Na

FIG.2a

FIG.2b

Fe

Fe$_2$O$_3$

C

Na

Ca

FIG.3